# EUROPEAN PATENT APPLICATION

(11) **EP 2 273 477 A1**
(43) Date of publication of application: **12.01.2011**
(21) Application number: 08718480.0
(22) Date of filing: 07.03.2008
(51) Int. Cl.: G09F 9/302, H04N 7/08, G06T 3/00, G06F 15/00, G06T 15/10, G06T 15/30, G09F 19/12

(54) **THREE-DIMENSIONAL VIRTUAL GRAPHICS OBJECT AND METHOD FOR GENERATING SAME**

(71) Applicant: Hemiri Sport Comunication, S.l., 28028 Leganés, Madrid (ES); Microsistemas Lagasca, S.a., 28028 Madrid (ES)
(72) Inventor: SOCIAS BATET, Marcel.lí, E-28911 Madrid (ES); RUIZ LÁZARO, Eulogio, E-28028 Madrid (ES)
(74) Representative: Elzaburu Marquez, Alberto
(86) International application number: PCT/ES2008/070044
(87) International publication number: WO 2009/109674

(57) **Abstract**

Three dimensional virtual graphics object (6, 7) and method of generating said object. The object (6,7) comprises a first group (3) of images and a second group of images superimposed on the former. The first group of images (3) comprises a base coloured image (1) with an opacity level between 40% and 75% and an image (2) with a polygon net raster and an opacity level between 20% and 65% superimposed on said base. The second group of images may comprise at least one image (4) differing from those of the first group, with the same polygon net raster as the image (2) with raster of the first group (3) and an opacity level between 80% and 100% or at least one image (5) differing from those of the first group having no raster and with an opacity level between 60% and 100%.

## Description

### FIELD OF THE INVENTION

This invention refers to a three dimensional virtual graphics object and a method for generating same for use of said object in the broadcasting of real images in particular through television.

### BACKGROUND OF THE INVENTION

The systems used for producing and creating virtual graphics in sports normally consists of computer equipment and a high capacity graphics system.

These systems permit the insertion and superimposition of graphics and virtual objects (such as, for example, sponsor's logos, or team emblems or flags) onto the surface of the work area (such as a playing filed or court in a sports broadcast). Said insertion of graphics does not hinder the progress of the event and does not affect the movement of the camera to which the virtual system is connected, therefore the viewers get the impression that the three dimensional graphics are part of the same environment from which the event is being transmitted and in real time.

In a similar manner the sponsors' logos and emblems of the teams are virtually placed on the surface of the field or court in which the players are performing.

This equipment shares the graphic provisions of the virtual system applying computerised control developments for TV with designs based on the same platform, which permits the representation of 2D and 3D graphics in real time, of text, logos, images and animation; adding information on results, statistics etc which contribute to improve the aspect and quality of the broadcast.

There are virtual elements, normally of the advertising type, which are particularly applicable to sports arenas. An example of such elements may be seen in Spanish patent 2152182 which describes a procedure for the creation of virtual advertising hoardings in sports fields and similar areas and a physical support for carrying out said procedure. The procedure in this patent permits the design of advertising posters of varied content for display on flat surfaces on the playing field or in adjacent areas of a sports field (for example, in the vicinity of the goals in a football pitch) with characteristics such that their visualisation by means of a television camera situated on a fixed point permits said viewing as if said poster were at the foot of a playing field, forming a virtual hoarding. Advertising supports have the form of canvas or similar material and are arranged on the surface of the playing field.

The virtual advertising elements and graphics and virtual objects described previously permit insertion of advertising or information during the broadcast of the event without interfering in its development. Nevertheless, on numerous occasions these elements do not produce a sufficiently realistic impression, particularly as they inserted on non compact vertical surfaces, producing undesirable flickering and thus the viewer perceives that these are superimposed virtual elements.

### SUMMARY OF THE INVENTION

Thus, the object of this invention is to provide a three dimensional virtual graphics object which produces an improved feeling of realism, in such a way that the viewer finds it difficult to perceive that the element is in fact a virtual one, and a method for generating said object.

The invention provides a three dimensional virtual graphics object, which comprises a first group of images and a second group of images which are superimposed on the previous one in which the first group of images comprises:
- a coloured base image, with an opacity level (alpha) between 40% and 75% and
- an image with a polygon net raster and an opacity level (alpha) between 20% and 65% superimposed on said base,
and in which the second group of images comprises at least one image other than those of the first group, with the same polygon net raster as the image with raster of the first group and an opacity level (alpha) between 80% and 100%.

The invention also provides a three dimensional virtual graphics object, which comprises a first group of images and a second group of images superimposed on the previous one in which the first group of images comprises:
- a coloured base image, with an opacity level (alpha) between 40% and 75% , and
- an image with a polygon net raster and an opacity level(alpha) between 20% and 65% superimposed on said base,
and in which the second group of images comprises at least one image other than those of the first group, having no raster and with an opacity level (alpha) between 60 % and 100%.

The invention also provides a method for generating a three dimensional virtual graphics object, which uses a graphic design computer programme and which comprises the following steps:
- creation of a layer with a coloured base image, with an opacity level (alpha) between 40% and 75%, and
- creation of a layer with a polygon net raster, with an opacity level (alpha) between 20% and 65%, and
- superimposition of the layer of the image with polygon raster on the layer with the base image, forming in this way a first group of images,
- creation of a second group of images with at least one layer having an image other than those of the first group, with the same polygon net raster as the image with raster of the first group and an opacity level (alpha) between 80% and 100%.
- superimposition of the second group of images on the first group of images.

The invention also provides a method for generating a three dimensional virtual graphics object, which uses a graphic design computer programme and which comprises the following steps:
- creation of a layer with a coloured base image, with an opacity level (alpha) between 40% and 75% , and
- creation of a layer with a polygon net raster, with an opacity level (alpha) between 20% and 65% , and
- superimposition of the layer of the image with polygon raster on the layer with the base image, forming in this way a first group of images,
- creation of a second group of images with at least one layer with an image differing from those of the first group, having no raster and with an opacity level (alpha) between 60 % and 100%.
- superimposition of the second group of images on the first group of images.

By means of the configurations indicated, the characteristics of consistency, texture and appearance of the three dimensional virtual graphics object are achieved which make it appear more real to the viewer's eyes.

Another advantage of the invention is that the object achieves a sense of improved transparency during the transmission of real images which permits a clear perception of real elements behind the virtual object, especially when it is in a vertical position, which contributes to increasing the sense of realism.

Other characteristics and advantages of the present invention will be indicated in the detailed description of an embodiment which illustrates the object with relation to the figures which accompany said description.

### BRIEF DESCRIPTION OF THE DRAWINGS

Figure 1 shows a base image
Figure 2 shows an image with a polygon net raster.
Figure 3 shows a detail of the image in Figure 2.
Figure 4 shows an image corresponding to the superimposition of images of figures 1 and 2.
Figure 5 shows an image with a graphic element which has the same polygon net raster as the image in figures 2 and 3.
Figure 6 shows an image with a graphic element without polygon net raster.
Figure 7 shows the virtual three dimensional object of the invention according to an embodiment.
Figure 8 shows the virtual three dimensional object of the invention according to another embodiment.

### DETAINED DESCRIPTION OF THE INVENTION

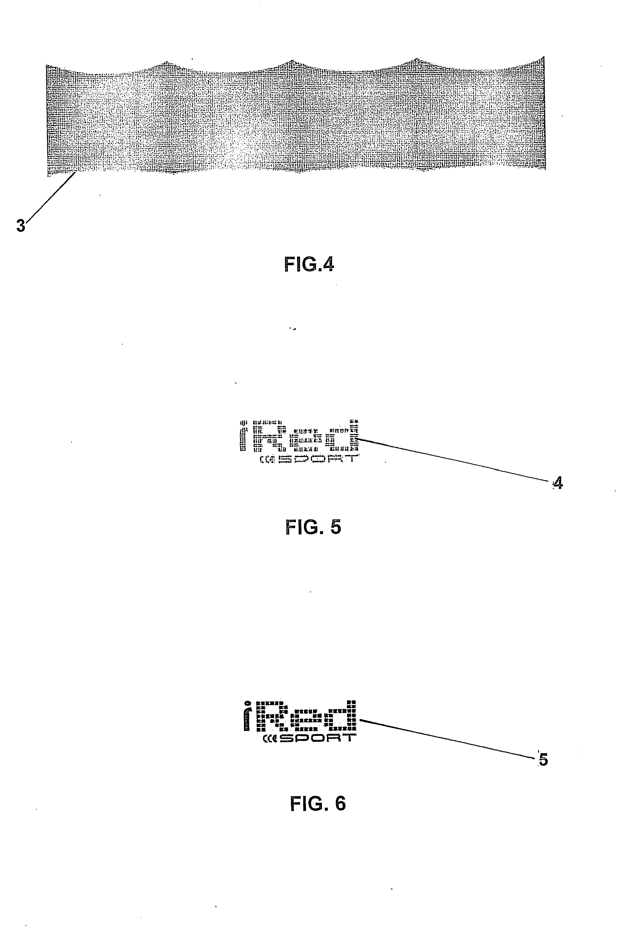

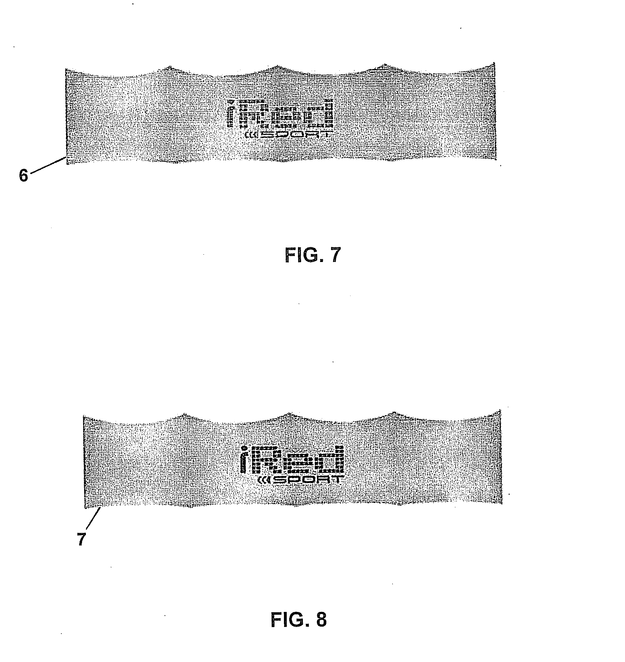

Figures 7 and 8 show that the three dimensional virtual object 6, 7 may take the form of a net, for example of the type used in football fields for placing behind the goals. In order to obtain this three dimensional object 6, 7 a first group of images 3 is superimposed (figure 4) on a second group of images.

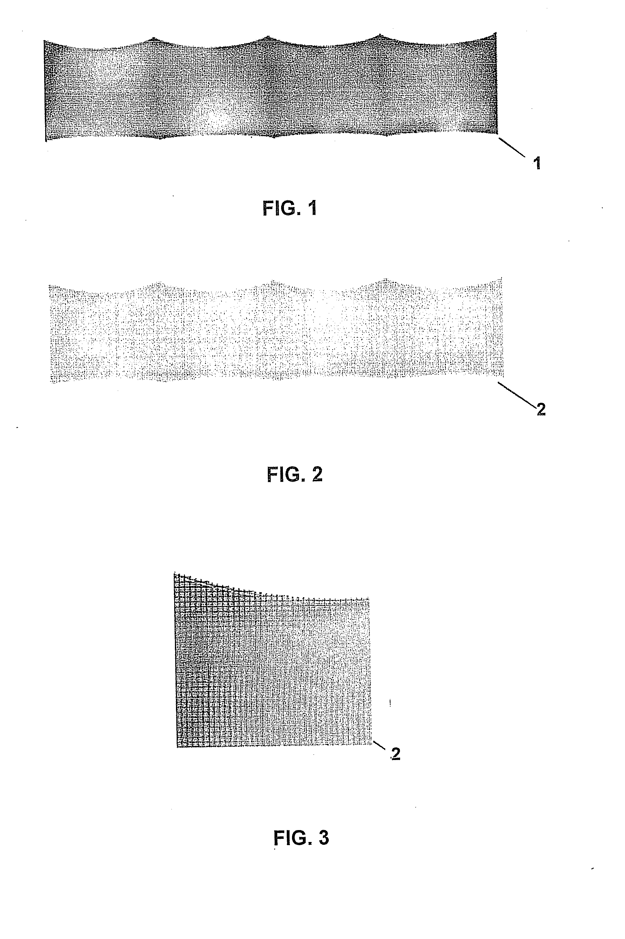

The first group of images 3 is formed by a base coloured image 1 , for example, in grey scale (figure 1) with an opacity level (alpha) between 40% and 75% and an image 2 (figures 1 and 3) with a polygon net raster and an opacity level (alpha) between 20% and 65% superimposed on said base. The base image 1 gives more clarity and consistency to the net image 2, therefore the virtual net thus achieved acquires a more realistic appearance, and also prevents flickering of the image. Said image 1 could have other colours according to the desired appearance of the object.

The opacity level (alpha) is an indicator of the degree of transparency or opacity of the image, and varies between 0% (transparent) and 100% (opaque).

On said virtual net another image may be superimposed, such as for example, a legend, a sponsor's logo or any type of graphics (see figures 5 and 6). This second group of images may be any of these two configurations:
- at least one image 4 other than those of the first group 3 with the same polygon net raster as the corresponding image of the first group and an opacity level (alpha) between 80% and 100%, or
- at least one image 5 differing from those of the first group 3, having no raster and with an opacity level (alpha) between 60% and 100%.

In each case the most appropriate configuration of the two former shall be chosen. The choice may depend, for example, on the type of playing field or court and its illumination, or on the position of the cameras broadcasting the event.

The desired image (for example, the sponsor's logo) is placed in this way on the virtual net with its graphic elements and corresponding colours. On the same virtual net the same image corresponding to this second group of images may be repeated various times.

The dimensional parameters, obviously, shall be those adequate for the real object that it is attempted to simulate.

Said images are, preferably, in TGA graphic format, as using this format images with a very realistic and detailed effect may be obtained.

Other graphic formats would also be possible, such as, for example, PSD format.

In order to improve the sense of realism, it is possible to add virtual graphic elements in the form, for example, of metal textured posts and with an opacity level (alpha) between 60% and 100 %. In the event that said posts already physically exist in the playing field, it would not be necessary to add them to the three dimensional virtual object.

Another three dimensional virtual graphic element which contributes to the realism of the object would be the upper net attachment cables, arranged between each of the two posts.

In a preferred embodiment, the polygon net raster is square. A square net raster is represented for example in detail in figure 3.

The second group of images may consist of various equal superimposed images (in each case, of type 4 or 5), which in this way permits the desired corresponding image to be highlighted. It is also possible to present images 4 or 5 of the second group as separate (for example, aligned) so that when superimposed on the first group 3 the image may be repeated several times and thus occupy the whole length of the virtual net on which it is placed.

The visual impression produced by the arrangement (that is, the three dimensional virtual graphic object 6, 7) is that of a real net marked with a graphic device (for example, a logo or a mark), and with sufficient transparency properties to enable what it is behind it to be seen, when said object is inserted in a broadcast of real images. The hang of the net is also appropriately represented.

The colour of the image 1 makes the object appear in a tone which imitates the colour desired for the net.

The basic configuration in net form also makes it applicable in sporting events which use a physical net (such as tennis, paddle or volley ball).

Therefore, the configuration of the three dimensional virtual object 6, 7 described would mainly be applied as a vertical advertising support, for example, during broadcasting of sporting events. By inserting said object 6, 7 in the broadcasting of real images, especially on television, the sense of realism conferred by the configuration of groups of images which make up the three dimensional virtual object 6, 7 gives the viewers the impression that the three dimensional object 6, 7 which represents, for example, a net forms part of the same environment in which the sporting event is being held.

The method of generating the object 6 comprises the following stages:
- creation of a layer with a coloured base image 1, with an opacity level (alpha) between 40% and 75% ,
- creation of a layer with an image 2 with a polygon net raster, with an opacity level (alpha) between 20% and 65% ,
- superimposition of the image 2 layer with polygon raster on the layer with the base image 1, forming in this way a first group 3 of images,
- creation of a second group of images with at least one layer having an image 4 differing from those of the first group, with the same polygon net raster as the image 2 with raster of the first group 3 and an opacity level (alpha) between 80% and 100%.
- superimposition of the second group of images on the first group 3 of images.

The other variant of the three dimensional virtual graphics object 7 could be generated using a computer graphic design programme, according to a method which comprises the following steps:
- creation of a layer with a coloured base image 1, with an opacity level (alpha) between 40% and 75% ,
- creation of a layer with an image 2 with a polygon net raster, with an opacity level (alpha) between 20% and 65% ,
- superimposition of the image 2 layer with polygon raster on the layer with the base image 1, forming in this way a first group 3 of images,
- creation of a second group of images with at least one layer with an image 5 differing from those of the first group, without raster and with an opacity level (alpha) between 60 % and 100%.
- superimposition of the second group of images on the first group 3 of images.

There are conventional computer programmes on the market which enable the creation, placement and presentation in virtual form of three dimensional graphic objects.

These methods of generating a three dimensional virtual graphic object 6, 7 may also comprise the additional steps of:
- superimposition of three dimensional graphic elements in form of metallic texture posts and with an opacity level (alpha) between 60% and 100%, and
- superimposition of three dimensional virtual graphic elements in form of upper cables holding the net, arranged between each two posts.

The second group of images may be created by superimposing various equal images (of type 4 or 5 in each case). Additionally, various separate images may be added to the second group of images (in each case, of type 4 or 5 in each case).

Furthermore, the layer with a coloured base image 1 may be formed by superimposing the same image several times. The layer with an image 2 with polygon raster may be formed by superimposing the same image several times. This superimposition of layers highlights the respective images.

By generating the image 2 areas of shadow may be incorporated, which permit greater realism by improving the sense of the fall of the net.

In the preferred embodiments of the invention that we have just described those modifications included in the scope defined by the following claims may be introduced.

## Claims

1. Three dimensional virtual graphics object (6), which comprises a first group of images(3) and a second group of images which is superimposed on the previous one, **characterised in that** the first group (3) of images comprises:
- a coloured base image (1), with a level of opacity (alpha) between 40% and 75% , and
- an image (2) with a polygon net raster and an opacity level (alpha) between 20% and 65% superimposed on said base,
and **in that** the second group of images comprises at least one image (4) differing from those of the first group, with the same polygon net raster as the image (2) with raster of the first group (3) and a level of opacity (alpha) between 80% and 100%.

2. The three dimensional virtual graphics object (7), which comprises a first group of images (3) and a second group of images which are superimposed on the previous one, **characterised in that** the first group (3) of images comprises:
- a coloured base image (1), with an opacity level (alpha) between 40% and 75% , and
- an image (2) with a polygon net raster and an opacity level (alpha) between 20% and 65% superimposed on said base,
and **in that** the second group of images comprises at least one image (5) differing from those of the first group, having no raster and with an opacity level (alpha) between 60 % and 100%.

3. Three dimensional virtual graphics object (6,7) according to claims 1 or 2 **characterised in that** the base image is coloured in grey scale.

4. Three dimensional virtual graphics object (6) according to claims 1 or 3 **characterised in that** the second group of images comprises various equal superimposed images (4).

5. Three dimensional virtual graphics object (6) according to any of claims 1 or 3 **characterised in that** the second group of images additionally comprises various separate images (4).

6. Three dimensional virtual graphics object (7) according to claims 2 or 3 **characterised in that** the second group of images comprises various equal superimposed images (5).

7. Three dimensional virtual graphics object (7) according to claims 2, 3 or 6 **characterised in that** the second group of images additionally comprises various separate images (5).

8. Three dimensional virtual graphics object (6, 7) according to any of the previous claims, **characterised in that** the images are in TGA graphic format.

9. Three dimensional virtual graphics object (6, 7) according to any of the previous claims, **characterised in that** the images are in PSD graphic format.

10. Three dimensional virtual graphics object (6, 7) according to any of the previous claims, **characterised in that** it comprises three dimensional virtual graphic elements in the form of metal textured posts and with an opacity level (alpha) between 60% and 100%.

11. Three dimensional virtual graphics object (6, 7) according to claim 10, **characterised in that** it comprises three dimensional virtual graphic elements in the forms of upper cables holding the net, arranged between each two posts.

12. Three dimensional virtual graphics object according to any of the previous claims, **characterised in that** the polygon net raster is square.

13. Method for generating a three dimensional virtual graphics object (6), which uses a computer graphic design programme **characterised in that** it comprises the followin,g steps:
- creation of a layer with a coloured base image (1), with an opacity level (alpha) between 40% and 75% ,
- creation of a layer with an image (2) with a polygon net raster, and an opacity level (alpha) between 20% and 65% ,
- superimposition of the image (2) layer with polygon raster on the layer with the base image (1), forming in this way a first group (3) of images,
- creation of a second group of images with at least one layer having an image (4) differing from those of the first group, with the same polygon net raster as the image (2) with raster of the first group (3) and an opacity level (alpha) between 80% and 100%.
- superimposition of the second group of images on the first group (3) of images.

14. Method for generating a three dimensional virtual graphics object (7), which uses a graphic design computer programme **characterised in that** it comprises the following steps:
- creation of a layer with a coloured base image (1), with an opacity level (alpha) between 40% and 75% ,
- creation of a layer with an image (2) with a polygon net raster, with an opacity level (alpha) between 20% and 55% ,
- superimposition of the image (2) layer with polygon raster on the layer with the base image (1), forming in this way a first group (3) of images,
- creation of a second group of images with at least one layer with an image (5) differing from those of the first group, without raster and with an opacity level (alpha) between 60 % and 100%.
- superimposition of the second group of images on the first group (3) of images.

15. Method for generating a three dimensional virtual graphics object (6, 7) according to claims 13 or 14, **characterised in that** it comprises the following steps:
superimposition of three dimensional graphic elements in form of metallic texture posts and with an opacity level (alpha) between 60% and 100%, and
- superimposition of three dimensional virtual graphic elements in form of upper cables holding the net, arranged between each two posts.

16. Three dimensional virtual graphics object (7) according to claims 14 or 15, **characterised in that** the second group of images additionally comprises various equal images (5).

17. Three dimensional virtual graphics object (7) according to claims 14, 15, or 16, **characterised in that** in order to create the second group of images various separate images (5) are added.

18. Three dimensional virtual graphics object (6) according to claims 13 or 15, **characterised in that** the second group of images additionally comprises various equal images (4).

19. Three dimensional virtual graphics object (6) according to claims 13, 15, or 18, **characterised in that** in order to create the second group of images various separate images (4) are added.

20. Method for generating a three dimensional virtual graphics object (6, 7) according to any of claims 13 to 19, **characterised in that** the layer with a coloured base image (1) is formed by superimposing the same image several times.

21. Method for generating a three dimensional virtual graphics object (6, 7) according to any of claims 13 to 20, **characterised in that** the layer with a coloured base image (2) is formed by superimposing the same image several times.

22. Method for generating a three dimensional virtual graphics object (6,7) according to any of claims 13 to 21, **characterised in that** when generating the image(2) shaded zones are incorporated.
